# EUROPÄISCHE PATENTSCHRIFT

(11) **EP 1 849 552 B1**
(45) Veröffentlichungstag und Bekanntmachung des Hinweises auf die Patenterteilung: **11.08.2010**
(21) Anmeldenummer: 07114287.1
(22) Anmeldetag: 27.04.2006
(51) Int. Cl.: B23K 20/12

(54) **Vorrichtung zum Fügen von mindestens zwei Bauteilen aus artverschiedenen Werkstoffen mit einem mit mindestens ein als Schneide augegebildetes Formelement aufweisenden Stift**
Device for connecting at least two components made of different materials with a pin having at least one formed member built as a cutting element
Dispositif destiné à l'assemblage d'au moins deux composants de matériaux différents avec un pion présentant un élément de forme construit comme un élément de coupe

(30) Priorität: 28.04.2005 DE 102005019758
(43) Veröffentlichungstag der Anmeldung: 31.10.2007
(62) Teilanmeldung aus: 06008752.5
(73) Patentinhaber: Hydro Aluminium Deutschland GmbH, 51149 Köln (DE)
(72) Erfinder: Maier, Christof, 50858, Köln (DE); Schröder, Dietmar, 41515 Grevenbroich (DE)
(74) Vertreter: Cohausz & Florack

(56) Entgegenhaltungen:
- EP-A- 1 510 280
- WO-A-01/28732
- DE-A1- 10 031 689
- JP-A- 2000 153 374
- US-A1- 2004 195 291

## Beschreibung

Die vorliegende Erfindung betrifft eine Vorrichtung zum Fügen von mindestens zwei Bauteilen aus artverschiedenen Werkstoffen, insbesondere Metallbauteilen aus artverschiedenen Werkstoffen, mit unterschiedlichen Schmelzpunkten mittels Reibrührschweißen gemäß dem Oberbegriff des Anspruchs 1 (siehe, insbesondere, WO 01/28732 A)

Das Reibrührschweißen bietet gegenüber anderen Fügeverfahren eine Reihe von Vorteilen. So muss beispielsweise beim oft eingesetzten Stanznieten ein Hilfsfügelement eingesetzt werden, wodurch zusätzliches Gewicht sowie zusätzliche Kosten erzeugt werden. Ein anderes Standardverfahren ist das mechanische Fügen, wobei jedoch oftmals keine ausreichende Festigkeit der erzeugten Verbindung erreicht wird.

Beim Schmelzschweißen oder Löten von artverschiedenen Werkstoffen, insbesondere von Werkstoffen aus Aluminium- und Stahlwerkstoffen, kommt es in der Praxis im Bereich der Aufmischung der Werkstoffe zu intermetallischen Phasen, die zu einer unerwünschten Sprödigkeit der Schweißnaht führen.

Ein weiteres bekanntes Fügeverfahren ist das Reibschweißen, bei dem eines der zu verbindenden Teile in Rotation versetzt wird und unter axialem Druck mit seiner Stirnseite auf die Stirnfläche eines stillstehenden zweiten Fügepartners gepresst wird. Dabei kommt es im Bereich der Stirnflächen zu einer Verbindung der Teile (Lexikon Produktionstechnik Verfahrenstechnik, Hrsg.: Heinz M. Hiersig, VDI-Verlag Düsseldorf, 1995). Ein Nachteil beim Reibschweißen ist, dass nur rotationssymmetrische oder zumindest rotierbare Teile miteinander verbunden werden können.

Durch das Institut für Werkstoff-Forschung des Deutschen Zentrums für Luft- und Raumfahrt (DLR) ist weiterhin ein Verfahren zum Reibrührschweißen von in einem Stumpfstoß zueinander angeordneten Bauteilen bekannt (Internet-Veröffentlichung des DLR: http://www.dlr.de/wf/forschung/fsw). Bei dem bekannten Verfahren wird ein rotierender Stift, der aus einer zylindrischen Schulter herausragt, mit großer Kraft in den Stumpfstoß zweier Bleche gedrückt und entlang der Fügelinie bewegt. Das Material wird durch die Reibung zwischen Schulter und Werkstück erwärmt und durch die Rotation des Stiftes verrührt, so dass sich die Bleche in einem Warmumformprozess verbinden. Dabei ist es bekannt, dass es sich bei den zu verbindenden Fügepartnern um Bauteile aus Aluminium und Stahl handeln kann. Dabei wird das Aluminium entlang der Fügelinie durch das Reibrührwerkzeug aufgeweicht und in einen teigigen Zustand versetzt. Die stahlseitige Fügekante bleibt dabei im festen Zustand und wird durch das Werkzeug mechanisch bearbeitet.

Ein Nachteil des bekannten Verfahrens ist, dass das Reibrührwerkzeug in der Praxis leicht bricht, da während des Vorschubs entlang der Fügelinie eine hohe Querbelastung insbesondere auf den Stift wirkt. Diese Gefahr ist besonders hoch zum Zeitpunkt des Schweißbeginns, wenn das Fügewerkzeug noch nicht seine Betriebstemperatur erreicht hat und somit noch eine große Sprödigkeit aufweist. Ein weiterer Nachteil ist, dass aufgrund des Fügeverfahrens und der Nahtart eine massive Bauteileinspannung und Abstützung, insbesondere von der dem Fügewerkzeug abgewandten Bauteilrückseite, erforderlich ist, damit sich die Bauteile während des Fügevorgangs durch die hohen wirkenden Kräfte nicht aus ihrer vorgesehenen Position bewegen können. Aus diesem Grund ist das Verfahren für bestimmte Anwendungen, insbesondere Anwendungen im Automobilbereich, wie dem Karosseriebau, nur eingeschränkt einsetzbar. Schließlich ist bei dem bekannten Verfahren bislang keine vollständige Erfassung der Nahtwurzel möglich.

Aus der Praxis ist weiterhin bekannt, dass Überlappschweißungen entlang einer Fügelinie zwischen Stahl und Aluminium durchgeführt wurden. Allerdings wurden dabei bislang keine zufriedenstellenden Schweißergebnisse erzielt.

Schließlich ist aus der Praxis ein Verfahren zum punktweisen Fügen von überlappend angeordneten Aluminiumbauteilen mittels Reibrührschweißen bekannt, das insbesondere bei der Herstellung von Automobiltüren eingesetzt wird. Bei dem bekannten Verfahren werden eine Werkzeugschulter sowie ein aus der Schulter hervorstehender Stift eines Fügewerkzeugs um die Längsachse des Stifts in Rotation versetzt. Durch eine Bewegung des Fügewerkzeugs in Richtung der Längsachse des Stifts wird dieser im Überlappungsbereich der Bauteile im Wesentlichen senkrecht auf die Oberfläche des ersten der zu fügenden Bauteile aufgesetzt und durch das erste zu fügende Bauteil hindurch zum Teil in das zweite Bauteil eingeführt. Es kommt dabei zu einem Aufschmelzen und Verrühren der Bauteilwerkstoffe im Bereich des eingeführten Stifts. Beim Einführen des Stifts kommt die rotierende Werkzeugschulter in Kontakt mit der Oberfläche des ersten Bauteils, wodurch eine weitere Erwärmung und Erweichung der Bauteile erreicht wird. Um den Füllprozess der durch den Stift erzeugten Öffnung in den Bauteilen mit Material der Bauteile zu unterstützen, kann die Schulter dabei zum Teil in das erste der Bauteile eingeführt werden. Anschließend wird der Stift in die Schulter zurückgezogen. Nach dem vollständigen Zurückziehen des Stifts in die Schulter wird das Fügewerkzeug von den Bauteilen entfernt und das aufgeschmolzene Material verfestigt sich. In dem Bereich, in dem der Stift in die Bauteile eingeführt wurde, entsteht somit eine Punktschweißverbindung zwischen den Bauteilen. Dieser Vorgang kann zur Herstellung einer Punktschweißverbindung an anderen Punkten der Bauteile wiederholt werden. Mit dem bekannten Verfahren ist es möglich, in Serie Punktschweißverbindungen von artgleichen Aluminiumteilen mittels Reibrührschweißen herzustellen, wobei ein geringerer Werkzeugverschleiß auftritt, da auf das Fügewerkzeug keine hohe Querbelastung wirkt.

Insbesondere in der Automobilindustrie ist es jedoch erwünscht, Fügeverbindungen zwischen artverschiedenen Bauteilen, beispielsweise zwischen Aluminium- und Stahlbauteilen, herzustellen und auf diese Weise die Bauteile optimal an die im Betrieb auftretenden Belastungen anzupassen und gleichzeitig größtmögliche Gewichtseinsparungen zu erreichen.

Die Patentschriften US 5,893,507 A, US 5,697,544 A, US 6,676,008 B1 sowie die Druckschrift JP 2002-079383 offenbaren jeweils eine Vorrichtung zum Reibrührschweißen mit einer Schulter und einem Stift, wobei der Stift ein Gewinde, Furchen oder Kerben aufweisen kann. Durch diese Ausgestaltungen des Stifts kann das beim Reibrührschweißen erweichte Material geführt und vermengt werden.

Der Erfindung lag die Aufgabe zugrunde, eine Vorrichtung der eingangs genannten Art bereitzustellen, mit denen sich mit hoher Produktivität Schweißverbindungen hoher Qualität zwischen Bauteilen aus artverschiedenen Werkstoffen herstellen lassen. Die Vorrichtung soll insbesondere für Anwendungen im Automobilbereich geeignet sein.

Die Aufgabe wird gelöst durch eine Vorrichtung zum Fügen von mindestens zwei Bauteilen aus artverschiedenen Werkstoffen, insbesondere Metallbauteilen aus artverschiedenen Werkstoffen, mit unterschiedlichen Schmelzpunkten mittels Reibrührschweißen gemäß dem Anspruch 1.

Die Vorrichtung ist geeignet für ein Verfahren zum Fügen von mindestens zwei Bauteilen aus artverschiedenen Werkstoffen, insbesondere Metallbauteilen aus artverschiedenen Werkstoffen, mittels Reibrührschweißen, bei dem die Bauteile zumindest teilweise in Überlappung miteinander gebracht werden, bei dem eine Schulter einer Fügevorrichtung und ein zwischen einer aus der Schulter in Richtung seiner Längsachse hervorstehenden Position und einer in die Schulter zurückgezogenen Position verschiebbarer Stift der Fügevorrichtung in Rotation um die Längsachse des Stifts gebracht werden, bei dem der rotierende Stift im Überlappungsbereich der Bauteile in Richtung seiner Längsachse in ein erstes der die Überlappung bildenden Bauteile zumindest bis zum Erreichen der Oberfläche eines zweiten der die Überlappung bildenden Bauteile eingeführt wird, bei dem der Stift anschließend aus den zu fügenden Bauteilen zurückgezogen wird und bei dem, beispielsweise, durch die zu fügenden Bauteile ein elektrischer Strom geleitet wird.

Der Erfindung liegt die überraschende Erkenntnis zugrunde, dass artverschiedene Werkstoffe mit der erfindungsgemäßen Vorrichtung zum Reibrührschweißen punktweise so miteinander verbunden werden können, dass eine hohe Anforderungen erfüllende Schweißverbindung erzeugt wird. Dabei wird aufgrund der praktisch nicht auftretenden Querbelastung auf die Fügevorrichtung ein geringer Werkzeugverschleiß und somit eine hohe Produktivität erreicht. Überraschenderweise ist es dabei insbesondere möglich, Werkstoffe mit beispielsweise erheblich unterschiedlichen Schmelzpunkten und/oder Festigkeiten, wie dies zum Beispiel bei Aluminiumwerkstoffen einerseits und Stahlwerkstoffen andererseits der Fall ist, in zufriedenstellender Weise zu fügen.

Es hat sich dabei insbesondere gezeigt, dass es für eine ausreichend feste Verbindung zwischen den artverschiedenen Bauteilen ausreicht, wenn der Stift im Wesentlichen nur bis zu der Oberfläche des zweiten Bauteils eingeführt wird. Ein Aufschmelzen des zweiten Bauteils sowie ein Einführen des Stifts in das zweite Bauteil sind für das Erreichen einer zufriedenstellenden Verbindung nicht zwingend erforderlich.

Der Begriff artverschieden bedeutet in dem Zusammenhang der Erfindung, dass sich die Bauteile in zumindest einer ihrer Eigenschaften in für den Fügeprozess erheblicher Weise unterscheiden. Die Unterschiede der Bauteile können dabei beispielsweise in ihren mechanischen Eigenschaften (z.B. Festigkeit etc.), chemisch-physikalischen Eigenschaften (z.B. Schmelzpunkt, Dichte etc.), Feldeigenschaften (z.B. magnetische/elektrische Eigenschaften etc.) oder verarbeitungstechnischen Eigenschaften liegen. Ein Beispiel für artverschiedene Werkstoffe im Sinne der Erfindung sind Aluminiumwerkstoffe auf der einen und Stahlwerkstoffe auf der anderen Seite. Auch andere Werkstoffkombinationen, beispielsweise unter Einsatz von Magnesiumwerkstoffen, sind jedoch selbstverständlich denkbar.

Üblicherweise wird der Stift im Überlappungsbereich der Bauteile im Wesentlichen senkrecht zu der Oberfläche des ersten Bauteils eingeführt. Sowohl der Stift als auch die Schulter können in besonders einfacher Weise eine im Wesentlichen zylindrische Form aufweisen. Dabei kann die Schulter in Form eines Hohlzylinders ausgebildet sein, wobei der Durchmesser des Hohlraums im Wesentlichen dem Durchmesser des Stifts entspricht, und die Länge des Hohlraums im Wesentlichen der Länge des Stifts entspricht, so dass dieser in einfacher Weise in die Schulter zurückgezogen werden kann.

Das mit dem rotierenden Stift in Verbindung kommende erste Bauteil wird durch die entstehende Reibung zwischen dem rotierenden Stift und dem Bauteil derart erwärmt, dass es lokal zu einem Erweichen, also zum Übergang des Materials in einen teigigen Zustand, insbesondere jedoch zu einem Aufschmelzen kommt. Somit kann der Stift mittels einer in Richtung seiner Längsachse wirkenden Axialkraft in das erste Bauteil eingeführt werden. Dabei wird von dem Stift das Material des ersten Bauteils verdrängt. Dies kann zum einen durch eine Verdichtung des Materials in den den Stift umgebenden Bereichen des ersten Bauteils erfolgen. Zum anderen kann ein Teil des Materials an die Bauteiloberfläche verdrängt werden.

Der rotierende Stift wird zumindest bis zum Erreichen der Oberfläche des zweiten Bauteils in das erste Bauteil eingeführt. Der Stift durchdringt das erste Bauteil im Überlappungsbereich also vollständig. Dabei kommt es im Kontaktbereich der Bauteile zu einer Verbindung der Bauteilwerkstoffe. Ein Aufweichen oder Aufschmelzen des zweiten Bauteils ist dazu nicht zwingend erforderlich. Vielmehr kann auch durch Aufweichen bzw. Aufschmelzen nur des Werkstoffs des ersten Bauteils und das durch den rotierenden Stift erfolgende Verrühren dieses Werkstoffs eine ausreichend feste Verbindung der Bauteile im Überlappungsbereich dadurch erzeugt werden, dass das Material des ersten Bauteils an dem Material des zweiten Bauteils anhaftet. Bei einem zusätzlichen Aufschmelzen des zweiten Bauteils findet eine Durchmischung der aufgeschmolzenen Werkstoffe statt, und es wird auf diese Weise eine Verbindung zwischen den Bauteilen erreicht.

Es ist selbstverständlich grundsätzlich denkbar, dass der Stift soweit eingeführt wird, dass er auch das zweite Bauteil zumindest zum Teil durchdringt.

Beim Zurückziehen des Stifts aus den Bauteilen kommt es durch das erweichte, insbesondere aufgeschmolzene Material zumindest des ersten Bauteils zu einem weitgehenden Auffüllen der von dem Stift hinterlassenen Öffnung mit aufgeweichtem bzw. aufgeschmolzenem Material.

Anschließend verfestigt sich das Material in dem Einführungsbereich des Stifts, und es kommt zu einer Punktschweißverbindung der Bauteile.

Auf diese Weise erzeugte Schweißverbindungen insbesondere zwischen Metallbauteilen aus artverschiedenen Werkstoffen, wie beispielsweise Aluminium- und Stahlwerkstoffen, zeichnen sich durch sehr schmale Zonen intermetallischer Phasen zwischen den Bauteilen aus. Die Schweißverbindungen besitzen daher eine geringe Sprödigkeit und widerstehen so großen Belastungen, wie sie insbesondere im Automobilbereich auftreten.

Weiterhin wird eine erhöhte Standzeit der eingesetzten Fügevorrichtungen erreicht, da kein Vorschub des Stifts durch die Bauteile entlang einer Fügelinie erforderlich ist, sondern eine punktweise Verschweißung der Bauteile vorgenommen wird. Eine Querbelastung des Stifts tritt somit nicht auf. Die Belastungen des Stifts sind daher erheblich verringert und die Standzeit und Produktivität sind erhöht. Schließlich sind ebenfalls aufgrund des nicht erforderlichen Vorschubs des Stifts durch die Bauteile die Anforderungen an die Bauteileinspannung und
- abstützung erheblich verringert, so dass das Verfahren problemlos im Automobilbereich, insbesondere im Karosseriebau, eingesetzt werden kann. Bei den Bauteilen kann es sich beispielsweise um Metallbleche für den Karosseriebau handeln.

Gemäß der erfindungsgemäßen Vorrichtung sind Mittel zum Bewegen des Stifts zwischen einer aus der Schulter in Richtung seiner Längsachse hervorstehenden Position und einer in die Schulter zurückgezogenen Position vorgesehen. Der Stift kann also insbesondere auch beliebige Zwischenpositionen zwischen den genannten Maximalpositionen einnehmen. Insbesondere sind dabei entsprechende Fixiermittel vorgesehen, durch die der Stift in jeder seiner möglichen Positionen fixiert werden kann.

Mit der erfindungsgemäßen Vorrichtung lässt sich das Fügeverfahren durchführen. Indem gemäß der erfindungsgemäßen Vorrichtung an dem Stift, insbesondere an seiner Kopfseite, mindestens ein als Schneide ausgebildetes Formelement vorgesehen ist, wird die Qualität der erzeugten Schweißverbindung weiter erhöht. Dabei kann zusätzlich oder alternativ zu einem oder mehreren Formelementen an der Kopfseite des Stifts auch an seinen Seitenflächen mindestens ein als Schneide ausgebildetes Formelement vorgesehen sein. Insbesondere findet durch den mit zumindest einem als Scheide ausgebildeten Formelement versehenen Stift ein verbessertes Aufweichen bzw. Aufschmelzen und Verrühren des erweichten bzw. aufgeschmolzenen Materials statt. Durch das Einbringen von beispielsweise Erhöhungen in den Stift, insbesondere in den Kopf des Stifts, wird aufgrund einer Konzentration der Kontaktfläche in dem Bereich der Erhöhungen der durch den Stift an diesen Positionen während des Fügevorgangs ausgeübte Druck erhöht. Somit können durch das gezielte Ausbilden einer Topographie an dem Stift gezielt lokale Aufweichungen bzw. Anschmelzungen der Bauteile herbeigeführt werden. Auch das Verrühren des aufgeweichten bzw. aufgeschmolzenen Materials kann somit gezielt beeinflusst werden. Auf diese Weise lässt sich der Fügevorgang noch gezielter beeinflussen und die Qualität der erzeugten Verbindung ist weiter verbessert.

Insbesondere, wenn Bauteile mit unterschiedlichen Schmelzpunkten gefügt werden, kann durch das gezielte Vorsehen von Formelementen das erweichte bzw. aufgeschmolzene Bauteil mit dem geringeren Schmelzpunkt mechanisch in den Fügepartner mit dem höheren Schmelzpunkt eingearbeitet werden bzw. an diesen anplattiert werden.

Eine Möglichkeit zur Ausbildung der Formelemente besteht darin, diese in Form von Erhöhungen, beispielsweise Höckern, Buckeln, Wulsten oder Noppen vorzusehen. Die Erhöhungen können dabei beispielsweise radial, speichenförmig, kreisförmig oder spiralförmig auf der Oberfläche des Stifts ausgebildet sein. Durch solche Ausgestaltungen lässt sich der Fügevorgang noch gezielter steuern.

Erfindungsgemäß (siehe Anspruch 1) ist zumindest ein als Schneide ausgebildetes Formelement an dem Stift angebracht oder in diesen eingearbeitet. Durch solche Schneiden können die zu fügenden Bauteile durch den Stift spanend bearbeitet werden. Dabei kann durch den Stift insbesondere das zweite Bauteil im Bereich seiner Oberfläche spanend bearbeitet werden. Die spanende Bearbeitung kann nach Durchdringen des ersten Bauteils durch den Stift geschehen. Wenn beispielsweise Bauteile mit unterschiedlichen Schmelzpunkten gefügt werden sollen, kann mit einer Schneide durch eine spanende Bearbeitung an dem Bauteil mit dem höheren Schmelzpunkt eine naszive, also neu entstehende, für die anschließend erfolgende Verbindung optimale Oberfläche geschaffen werden. Dabei muss das höherschmelzende Material nicht notwendigerweise aufgeschmolzen werden. Die Oberfläche wird vielmehr so bearbeitet, dass das aufgeweichte bzw. aufgeschmolzene Material des niedriger schmelzenden Bauteils optimal an dem höher schmelzenden Bauteil anhaften kann.

Weiterhin können Mittel zum Leiten eines elektrischen Stroms durch die zu fügenden Bauteile vorgesehen sein. Somit kann durch die zu fügenden Bauteile ein elektrischer Strom geleitet werden. Der Strom kann dabei insbesondere im Überlappungsbereich der Bauteile durch die Bauteile geleitet werden.

Es ist grundsätzlich denkbar, sowohl auf der Seite, von der der Stift in die Bauteile eingeführt wird, als auch auf der gegenüberliegenden Seite der zu fügenden Bauteile jeweils Elektroden zum Einleiten und zum Abfließen des Stroms vorzusehen. Alternativ ist es in besonders einfacher Weise möglich, den elektrischen Strom über die Fügevorrichtung selbst, beispielsweise über den Stift, in die Bauteile einzuleiten. In diesem Fall muss nur auf der der Fügevorrichtung gegenüberliegenden Seite der Bauteile eine Elektrode zum Abfließen des Stroms aus den Bauteilen vorgesehen sein.

Der elektrische Strom kann grundsätzlich als Gleichstrom oder als Wechselstrom, insbesondere auch gepulst, in die Bauteile eingeleitet werden. Die Mittel zum Leiten des Stroms durch die Bauteile weisen eine entsprechende Stromerzeugungseinrichtung auf. Der Strom kann dabei sowohl vor, während als auch nach dem Fügevorgang in die Bauteile eingeleitet werden.

Der durch die Bauteile geleitete Strom kann für verschiedene Zwecke genutzt werden. So können durch den Strom beispielsweise Verunreinigungen zwischen den zu fügenden Bauteilen, wie Öl-, Zink-, Oxid- oder Kleberschichten vor dem Fügevorgang entfernt werden, indem diese durch die durch den elektrischen Strom erzeugte Erwärmung der Bauteile verdampft werden. Derartige Verunreinigungen können andernfalls das Fügeergebnis in negativer Weise beeinflussen. Auch können durch den Strom die zu fügenden Bauteile vor, während und nach dem Fügeprozess gezielt erwärmt werden und so der Fügevorgang vorteilhaft beeinflusst werden.

Weiterhin ist es möglich, den Strom als Messstrom für eine Widerstands- bzw. im Fall eines Wechselstroms für eine Impedanzmessung einzusetzen. Dazu können Mittel zur Messung des elektrischen Widerstands vorgesehen sein, den der elektrische Strom beim Leiten durch die zu fügenden Bauteile erfährt. Die Impedanzmessung, kann gegenüber der Messung des Ohmschen Widerstands mit erhöhter Genauigkeit durchgeführt werden kann. In dieser Anmeldung werden Impedanzmessungen grundsätzlich auch als Widerstandsmessung bezeichnet. Die Widerstandsmessung kann in besonders einfacher Weise beispielsweise über eine Messung des Abfalls der den elektrischen Strom erzeugenden Spannung durchgeführt werden.

Der elektrische Widerstand der Bauteile wird durch Verunreinigungen auf den Bauteiloberflächen beeinflusst. Mit Hilfe einer Widerstandsmessung können daher beispielsweise Rückschlüsse auf das Vorhandensein von Verunreinigungen auf den Bauteilen gemacht werden, oder das Abtragen solcher Verunreinigungen mittels eines elektrischen Stroms kann durch eine während des Abtragens insbesondere wiederholt durchgeführte Widerstandsmessung überwacht werden. Denn der Widerstand der Bauteile ändert sich mit fortschreitender Entfernung der Verunreinigungen.

Eine Widerstandsänderung tritt zudem ein, wenn eine Schweißverbindung zwischen den zu fügenden Bauteilen hergestellt wird. Somit kann durch eine Widerstandsmessung vor, während und/oder nach dem Fügen auch der Fügevorgang selbst überwacht werden.

Auch ist es in dem Fall, dass der Strom durch den Stift der Fügevorrichtung in die Bauteile eingeleitet wird, möglich, dass mittels einer Widerstandsmessung die Eintauchtiefe des Stifts in die Bauteile überwacht wird. Denn der Widerstand, den der elektrische Strom beim Fließen durch die Bauteile erfährt, verändert sich in diesem Fall mit zunehmender Eintauchtiefe des Stifts in die Bauteile.

Es kann eine Prozessregelung vorgesehen sein, die unter Berücksichtigung der aus der Widerstandsmessung erhaltenen Informationen den Prozess, beispielsweise das Einführen des Stifts in die Bauteile, in für das Fügen der Bauteile optimaler Weise steuert. Dabei können beispielsweise die Rotationsgeschwindigkeit, die Vorschubgeschwindigkeit oder auch der Eintauchweg von Schulter und Stift in die Bauteile gesteuert werden. Jedoch können grundsätzlich auch sämtliche anderen für den Fügevorgang relevanten Parameter im Rahmen einer solchen Steuerung geregelt werden.

Für weitere sich aus dem Einleiten eines elektrischen Stroms in die Bauteile bzw. aus einer Widerstandsmessung ergebende Anwendungen und Vorteile wird auf die in der ebenfalls auf die Anmelderin zurückgehenden deutschen Patentanmeldung mit dem Aktenzeichen 10 2004 054 856.0 enthaltenen Anwendungen und Vorteile des Einleitens eines elektrischen Stroms in Bauteile bzw. einer entsprechenden Widerstandsmessung verwiesen.

Gemäß einer bevorzugten Ausgestaltung kann die rotierende Schulter zumindest zeitweise während des Einführens und/oder Zurückziehens des Stifts in Kontakt mit der im Überlappungsbereich dem zweiten Bauteil abgewandten Oberfläche des ersten Bauteils kommen. Auf diese Weise wird durch die Reibung zwischen der rotierenden Schulter und der Bauteiloberfläche ein weiteres Erwärmen und somit Aufweichen bzw. Aufschmelzen zumindest des ersten Bauteils erreicht. Die Schweißverbindung zwischen den Bauteilen wird somit verbessert, und das Fügen kann schneller durchgeführt werden. Weiterhin verhindert die mit dem ersten Bauteil in Kontakt stehende Schulter, dass große Mengen an Werkstoff des ersten Bauteils durch den Stift an die Bauteiloberfläche verdrängt werden. Natürlich kann auch vor und nach dem Einführen bzw. Zurückziehen des Stifts ein Kontakt zwischen der Schulter und der Oberfläche des ersten Bauteils bestehen. Ein Kontakt zwischen der Schulter und der Oberfläche des ersten Bauteils beinhaltet dabei auch beispielsweise ein geringfügiges Einführen der Schulter in das Bauteil.

Der Stift kann in praktisch besonders einfacher Weise in einer zumindest zum Teil aus der Schulter hervorstehenden Position durch eine in Richtung der Längsachse des Stifts erfolgende Bewegung der Schulter in das erste Bauteil eingeführt werden. In diesem Fall ragt der Stift also bereits vor dem Kontakt mit dem ersten Bauteil zumindest zum Teil, also insbesondere möglicherweise auch vollständig, aus der Schulter hervor und ist in dieser hervorstehenden Position fixiert. Durch eine in Richtung der Längsachse des Stifts erfolgende Bewegung der Schulter wird der Stift in das erste Bauteil eingeführt.

Auch kann der Stift durch Verschieben in Richtung seiner Längsachse aus einer zumindest zum Teil in die Schulter zurückgezogenen Position in das erste Bauteil eingeführt werden. In diesem Fall kann also beispielsweise zunächst durch die rotierende Schulter eine Erwärmung des ersten Bauteils erreicht werden, indem diese mit dem ersten Bauteil in Kontakt gebracht wird. Dann kann der ebenfalls rotierende Stift aus der Schulter heraus in das erste Bauteil eingeführt werden. Das Einführen des Stifts ist aufgrund des Vorwärmens des Bauteils durch die Schulter in vereinfachter Weise möglich.

Es ist dabei möglich, dass der Stift zunächst in einer zum Teil in die Schulter zurückgezogenen fixierten Position durch eine Axialbewegung der Schulter in das Werkstück eingeführt wird und dann, beispielsweise wenn die Schulter das erste Bauteil erreicht hat, weiter aus der Schulter gefahren wird und so weiter in die Bauteile eingeführt wird. Alternativ kann der Stift vor dem Einführen in das Bauteil vollständig in die Schulter zurückgezogen sein.

Auch eine Kombination der beiden Arten des Einführens des Stifts ist möglich.

Das Zurückziehen des Stifts aus den zu fügenden Bauteilen kann wiederum in besonders einfacher Weise in einer zumindest zum Teil aus der Schulter hervorstehenden Position durch eine in Richtung der Längsachse des Stifts erfolgende Bewegung der Schulter erfolgen. Der Stift wird in diesem Fall also gemeinsam mit der Schulter von dem Bauteil zurückgezogen.

Auch ist es möglich, dass der Stift durch ein aus einer zumindest zum Teil aus der Schulter hervorstehenden Position erfolgendes Zurückziehen in die Schulter aus den zu fügenden Bauteilen zurückgezogen wird. In diesem Fall kann die Schulter also beispielsweise in Kontakt mit dem ersten Bauteil bleiben, während der Stift durch ein Zurückziehen in die Schulter aus den Bauteilen gezogen wird. Durch den Kontakt der Schulter mit dem Bauteil während des Zurückziehens des Stifts kann das Auffüllen der durch den Stift hinterlassenen Öffnung verbessert werden.

Wiederum ist auch eine Kombination der beiden Arten des Zurückziehens des Stifts möglich.

Grundsätzlich ist es also möglich, dass die Bewegungen des Stifts und der Schulter getrennt voneinander gesteuert werden. Die Flexibilität wird auf diese Weise erhöht.

Das erste der die Überlappung bildenden Bauteile kann insbesondere einen niedrigeren Schmelzpunkt besitzen, als das zweite der die Überlappung bildenden Bauteile. Der Stift wird also zuerst in das Bauteil mit einem niedrigeren Schmelzpunkt eingeführt. Dieses Bauteil kann von dem Stift bei geringerer Rotation und geringerer ausgeübter Axialkraft aufgeweicht und durchdrungen werden als das zweite Bauteil.

Dabei kann das erste Bauteil im Einwirkungsbereich der Fügevorrichtung aufgeweicht, insbesondere aufgeschmolzen werden, während das zweite Bauteil im Wesentlichen im festen Zustand bleibt. Auch wenn bei Erreichen des zweiten Bauteiles dieses nicht wesentlich aufgeweicht wird, wird durch das Aufweichen des ersten Bauteils eine zufriedenstellende Schweißverbindung zwischen den Bauteilen im Bereich des eingeführten Stifts erreicht. Dabei kann der aufgeweichte bzw. aufgeschmolzene Werkstoff des ersten Bauteils an dem Werkstoff des zweiten Bauteils anhaften. Für eine solche Verbindung reicht entsprechend eine geringe Rotation und Axialkraft des Stifts aus. Der Einwirkungsbereich der Fügevorrichtung ist in erster Linie der Bauteilbereich, in den der Stift eingeführt wird und der an diesen Bereich angrenzende Bauteilbereich. Bei Kontakt der Schulter mit der Oberfläche des ersten Bauteils findet jedoch selbstverständlich auch in diesem Bereich eine Einwirkung statt.

Es ist jedoch auch möglich, dass das erste Bauteil im Einwirkungsbereich der Fügevorrichtung aufgeweicht, insbesondere aufgeschmolzen wird und, dass das zweite Bauteil zumindest lokal in dem Bereich unterhalb des eingeführten Stifts aufgeweicht, insbesondere aufgeschmolzen wird. Das zweite Bauteil wird dabei typischerweise lokal in dem Bereich aufgeschmolzen, in dem es in Kontakt mit dem rotierenden Stift kommt. Durch ein solches lokales Aufweichen oder Aufschmelzen des zweiten Bauteils wird die Verbindung zwischen den beiden Bauteilen weiter verbessert, da es zu einer Vermischung der aufgeweichten bzw. aufgeschmolzenen Bauteilwerkstoffe kommt.

Gemäß einer weiteren Lehre kann die Schulter zumindest zeitweise während des Einführens des Stifts entgegen der Bewegungsrichtung des Stifts von dem ersten Bauteil entfernt werden. Auf diese Weise besteht zwischen dem ersten Bauteil und der Schulter ein Freiraum, in den das von dem in das Bauteil eindringenden Stift verdrängte Material des Bauteils gelangen kann.

Nach einer weiteren Ausgestaltung kann die Schulter zumindest zeitweise während des Zurückziehens des Stifts zumindest zum Teil in das erste Bauteil eingeführt werden. Auf diese Weise wird durch die rotierende Schulter das erste Bauteil weiter erwärmt und somit weiter aufgeweicht bzw. aufgeschmolzen. Im Einführungsbereich der Schulter wird außerdem Bauteilmaterial von der Schulter verdrängt, das dann beispielsweise in die von dem Stift in den Bauteilen verursachte Öffnung gelangt. Dadurch wird das Auffüllen der von dem Stift beim Zurückziehen aus den Bauteilen hinterlassenen Öffnung unterstützt, so dass die Verbindung zwischen den Bauteilen und das Erscheinungsbild der Bauteile verbessert werden.

Um die Fügeverbindung zwischen den Bauteilen zu optimieren, kann auf der der Fügevorrichtung abgewandten Seite der überlappenden Bauteile eine Badabstützung vorgesehen werden. Als Badabstützung kann beispielsweise ein Metallteil im Bereich der herzustellenden Fügeverbindung an der dem ersten Bauteil abgewandten Seite des zweiten Bauteils angebracht werden. Eine solche Badabstützung verhindert eine unerwünschte Verformung der der Badabstützung zugeordneten Unterseite der Fügeverbindung und verbessert somit die Ausbildung der Fügeverbindung.

Für den Fall, dass ein elektrischer Strom durch die zu fügenden Bauteile geleitet wird, ist es in besonders einfacher Weise möglich, für das Abfließen oder Einleiten des Stroms aus den Bauteilen bzw. in die Bauteile die Badabstützung einzusetzen.

In praktisch besonders geeigneter Weise kann die Badabstützung durch ein zu fügendes Bauteil selbst gebildet werden. Auf diese Weise ist keine gesonderte Badabstützung erforderlich. So ist es beispielsweise möglich, dass das zweite Bauteil an seiner dem ersten Bauteil abgewandten Seite eine Ausformung aufweist, die als Badabstützung dienen kann.

Um den Werkzeugverschleiß weiter zu verringern, können der Stift und/oder die Schulter vor dem Fügen vorgeheizt werden. Auf diese Weise erreichen diese bereits vor dem Kontakt mit dem Bauteil eine ausreichende Duktilität, um ein Brechen des Werkzeugs sicher zu verhindern. Das Vorheizen kann beispielsweise durch Leiten eines elektrischen Stroms durch die Schulter und den Stift erfolgen. Aber auch sämtliche anderen Verfahren zum Vorheizen des Stifts und der Schulter sind denkbar.

Gemäß einer bevorzugten Ausgestaltung kann das Aufsetzen des Stifts und/oder der Schulter auf das erste der die Überlappung bildenden Bauteile mittels einer Kraft-Weg-Messung und/oder einer Drehmomentmessung festgestellt werden. Bei Aufsetzen des Stifts oder der Schulter auf ein Bauteil erfahren diese einen mechanischen Widerstand, der zu einem Anstieg der für einen Vortrieb erforderlichen Kräfte führt. Dieser Anstieg kann im Rahmen einer Kraft- bzw. Kraft-Weg-Messung festgestellt werden und als Indiz für das Erreichen der Bauteiloberfläche genommen werden. Auf diese Weise kann der Aufsetzzeitpunkt mit hoher Genauigkeit festgestellt werden. Natürlich ist es auch möglich, ergänzend oder alternativ als Kriterium den Anstieg des für eine Aufrechterhaltung der Rotation erforderlichen Drehmoments bei Aufsetzen auf eine Bauteiloberfläche zu nutzen.

Ebenso ist es möglich gemäß der Erfindung, die Position des Stifts während des Einführens, insbesondere das Aufsetzen des Stifts auf dem zweiten der die Überlappung bildenden Bauteile, mittels einer Kraft-Weg-Messung und/oder einer Drehmomentmessung zu bestimmen. Aufgrund der Artverschiedenheit der Werkstoffe haben diese üblicherweise unterschiedliche mechanische und physikalische Eigenschaften, beispielsweise eine unterschiedliche Festigkeit. Aufgrund dieser Unterschiede wird sich bei Erreichen des zweiten Bauteils die zur Aufrechterhaltung des Vortriebs des Stifts erforderliche Kraft ändern. Ebenso wird sich das Drehmoment ändern, das zur Aufrechterhaltung der Rotation des Stifts erforderlich ist. Somit lässt sich durch eine Kraft- bzw. Kraft-Weg-Messung und/oder eine Drehmomentmessung in besonders präziser Weise die anderweitig in den Bauteilen schwer festzustellende Position des Stifts, insbesondere das Auftreffen auf das zweite Bauteil feststellen. Der Fügevorgang kann so weiter optimiert werden.

Das Aufsetzen des Stifts auf dem zweiten Bauteil ist dabei besonders gut feststellbar, wenn die Werkzeugschulter zunächst auf das erste Bauteil aufgesetzt wird, und der Stift dann aus einer zumindest zum Teil in die Schulter zurückgezogenen Position aus der Schulter in das Bauteil gefahren wird. Das Aufsetzen des Stifts auf das zweite Bauteil ist jedoch auch dann detektierbar, wenn dem Ausfahren des Stifts aus der Werkzeugschulter in das Bauteil eine Bewegung der Schulter in das erste Bauteil oder von diesem weg überlagert wird.

Es ist denkbar, dass zwischen dem ersten Bauteil und dem zweiten Bauteil zumindest im Überlappungsbereich mindestens ein drittes Bauteil angeordnet wird. Dabei können eine Mehrzahl von Bauteilen zwischen dem ersten und zweiten Bauteil vorgesehen sein. Es ist also möglich, dass Mehrschichtverbindungen, insbesondere Mehrblechverbindungen hergestellt werden, wobei mindestens zwei Bauteile artverschieden sind. Dabei ist es denkbar, dass das dritte Bauteil artverschieden zu den beiden anderen Bauteilen ist. Es ist jedoch auch möglich, dass das dritte Bauteil zu einem der beiden anderen Bauteile nicht artverschieden ist.

So ist es beispielsweise denkbar, dass das erste Bauteil ein Blech aus einem Aluminiumwerkstoff ist und das zweite Bauteil ein Blech aus einem Stahlwerkstoff ist, während das zwischen dem ersten und zweiten Blech vorgesehene dritte Bauteil ein Blech aus einem Aluminiumwerkstoff ist. In diesem Fall durchdringt der Stift zum Fügen der Bleche das erste und dritte Blech aus Aluminium zumindest bis zu der Oberfläche des zweiten Blechs aus Stahl. Es ist jedoch beispielsweise auch denkbar, dass das dritte Blech aus einem Stahlwerkstoff besteht, so dass der Stift zum Fügen der Bleche auch das dritte Blech aus Stahl bis zumindest zur Oberfläche des zweiten Blechs durchdringen muss.

Alternativ oder zusätzlich kann auf der dem ersten Bauteil abgewandten Seite des zweiten Bauteils zumindest im Überlappungsbereich mindestens ein drittes Bauteil angeordnet werden. Wiederum können natürlich eine Mehrzahl von Bauteilen benachbart zu dem zweiten Bauteil angeordnet werden. Es ist denkbar, dass das erste und dritte Bauteil aus nicht artverschiedenen Werkstoffen bestehen, während das zwischen dem ersten und dritten Bauteil angeordnete zweite Bauteil aus einem zu dem ersten und zweiten Bauteil artverschiedenen Werkstoff besteht. So ist es beispielsweise möglich, dass das erste und dritte Bauteil Bleche aus einem Aluminiumwerkstoff sind, während das zwischen dem ersten und dritten Bauteil angeordnete zweite Bauteil ein Blech aus einem Stahlwerkstoff ist.

Bei Verbindungen von mehr als zwei Bauteilen ist es möglich, dass ein rotierender Stift einer zweiten Fügevorrichtung im Überlappungsbereich der Bauteile in Richtung seiner Längsachse in das dem ersten, äußeren Bauteil gegenüberliegende äußere Bauteil zumindest bis zum Erreichen der Oberfläche des zwischen den äußeren Bauteilen befindlichen mindestens einen Bauteils eingeführt wird. In diesem Fall ist also eine zweite Fügevorrichtung vorgesehen, und der Stift der zweiten Fügevorrichtung wird von der dem Stift der ersten Fügevorrichtung gegenüberliegenden Seite in die im Überlappungsbereich übereinander angeordneten Bauteile eingeführt. Auf diese Weise kann die Verbindung der Bauteile von zwei Seiten gleichzeitig erfolgen. Dabei können die Stifte jeweils nur bis zu der ihnen jeweils zugeordneten Oberfläche des mittleren Bauteils eingeführt werden. Es ist jedoch auch denkbar, dass einer oder beide Stifte auch in das mittlere Bauteil eingeführt werden. Die Stifte werden üblicherweise an gegenüberliegenden Positionen in die Bauteile eingeführt. Dabei ist es grundsätzlich auch möglich, dass die Stifte so weit eingeführt werden, dass sie aufeinandertreffen. Durch Einsatz einer zweiten Fügevorrichtung kann in besonders schneller Weise eine zufriedenstellende Punktschweißverbindung zwischen mehr als zwei Bauteilen erreicht werden. Eine Badabstützung ist in diesem Fall nicht erforderlich, denn diese Aufgabe wird von der zweiten Fügevorrichtung übernommen.

Schließlich ist es denkbar, dass mindestens eines der Bauteile eine Beschichtung aufweist. Eine solche Beschichtung kann beispielsweise eine Verzinkung oder Aluminierung sein. Die Beschichtung kann auch eine Plattierung sein. Durch eine solche Beschichtung kann die Verbindung zwischen den Bauteilen erleichtert werden. Wird als zweites der die Überlappung bildenden Bauteile beispielsweise ein mit Aluminium plattiertes Stahlblech eingesetzt, so ist es möglich, dass der Stift durch das erste Bauteil hindurch nur bis in die Aluminium-Plattierschicht gefahren wird, nicht jedoch in das Stahlblech selbst.

Um Fertigungskosten zu sparen, können für die Verbindung auch ungereinigte Bauteile eingesetzt werden, die beispielsweise eine Ölschicht aufweisen.

Es ist außerdem möglich, die Vorrichtung in Kombination mit anderen Verfahren bzw. Vorrichtungen einzusetzen, beispielsweise Verfahren und Vorrichtungen zum Kleben oder Nieten, oder thermischen Verfahren.

Es ist auch möglich, dass sich zwischen den Bauteilen ein ausgehärteter oder auch ein noch nicht ausgehärteter Klebstoff befindet, wobei die Schweißverbindung durch den Klebstoff hindurch hergestellt wird. Ein solcher Klebstoff kann die Verbindung der Bauteile weiter verbessern.

Im Folgenden wird eine Fügevorrichtung anhand einer ein Ausführungsbeispiel darstellenden Zeichnung näher erläutert. Es zeigen schematisch:
- Fig. 1a)-g): eine Vorrichtung in verschiedenen Betriebspositionen in einer Schnittansicht,
- Fig. 2: den Stift einer Vorrichtung in einer vergrößerten Ansicht, und
- Fig. 3: ein mit einer erfindungsgemäßen Kraft-Weg-Messung erstelltes Diagramm.

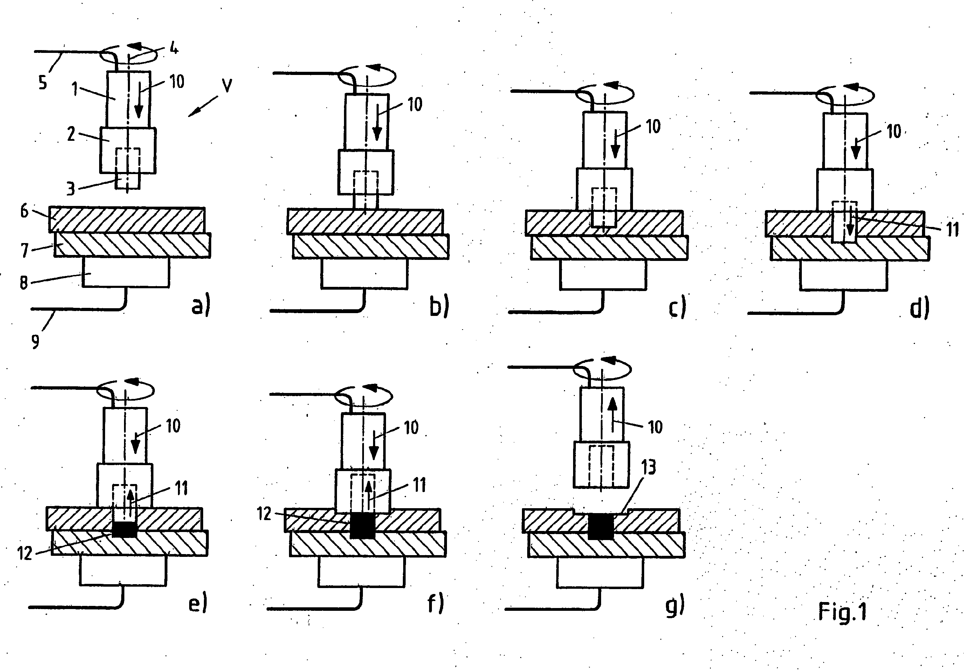

In den Figuren 1a) bis 1g) ist eine erfindungsgemäße Fügevorrichtung V schematisch in verschiedenen Betriebspositionen dargestellt. Die Vorrichtung V weist einen Drehantrieb 1 auf, an dem eine im Wesentlichen als Hohlzylinder ausgebildete Schulter 2 gehalten ist. In Figur 1a) ist ein im Wesentlichen zylindrischer Stift 3 in einer zum Teil aus der Schulter 2 hervorstehenden Position dargestellt. Der zylindrische Hohlraum der Schulter 2 ist dabei derart ausgebildet, dass der Stift 3 vollständig in diese zurückgezogen werden kann bzw. in Richtung seiner Längsachse aus der Schulter 3 herausgefahren werden kann. Für die Bewegung des Stifts 3 sind dabei entsprechende nicht näher dargestellte Bewegungsmittel vorgesehen. Der Stift 3 kann dabei in beliebigen Positionen zwischen vollständigem Herausfahren aus und vollständigem Zurückziehen in die Schulter 2 fixiert werden. Sowohl die Schulter 2 als auch der Stift 3 können mittels des Drehantriebs 1 in Rotation um die Rotationsachse 4 versetzt werden, wie durch den umlaufenden Pfeil in den Figuren 1a) bis 1g) angedeutet. Die Rotationsachse 4 ist dabei parallel zu der Längsachse des Stifts 3 und der Schulter 2. Der Stift 3 sowie die Schulter 2 können beispielsweise aus einem hochfesten Werkzeugstahl bestehen.

An der dem Stift 3 abgewandten Oberseite der Fügevorrichtung V ist schematisch ein Anschluss 5 für einen elektrischen Wechselstrom vorgesehen. Der Anschluss 5 ist mit einer nicht dargestellten Wechselstromerzeugungseinrichtung verbunden.

Auf der dem Stift 3 zugeordneten Seite sind unterhalb der Vorrichtung V ein erstes Bauteil 6 und ein zweites Bauteil 7 teilweise in Überlappung miteinander gebracht worden. Bei den Bauteilen 6, 7 handelt es sich im vorliegenden Beispiel um Metallbleche für den Karosseriebau von Automobilen. Das erste die Überlappung bildende Bauteil 6 besteht dabei aus einem Aluminiumwerkstoff, während das zweite die Überlappung bildende Bauteil 7 aus einem Stahlwerkstoff besteht. Das zweite Bauteil 7 weist einen höheren Schmelzpunkt und eine höhere Festigkeit als das erste Bauteil 6 auf.

Auf der der Vorrichtung V abgewandten Seite des zweiten Bauteils 7 ist eine Badabstützung 8 vorgesehen, die beispielsweise durch ein Werkstück aus einem Werkzeugstahl gebildet sein kann. An der Badabstützung 8 ist ebenfalls schematisch ein Anschluss 9 für einen elektrischen Wechselstrom vorgesehen. Der Anschluss 9 ist ebenfalls mit der nicht dargestellten Wechselstromerzeugungseinrichtung verbunden.

Die Vorrichtung V weist weiterhin nicht näher dargestellte Mittel zum Bewegen der Schulter 2 in Richtung der Längsachse des Stifts 3 auf. Mittels dieser Bewegungsmittel kann die Schulter 2 gemeinsam mit dem Stift 3 in Richtung der Längsachse des Stifts 3 hin- und her bewegt werden. Unabhängig von dieser Bewegung kann der Stift 3 aus der Schulter 2 heraus und in diese hineinbewegt werden und jeweils fixiert werden, bzw. in jeder dazwischenliegenden Position fixiert werden.

Im Folgenden wird die Funktionsweise der Vorrichtung V anhand der in den Figuren 1a) bis 1g) dargestellten Betriebspositionen erläutert.

In Figur 1a) befindet sich die Vorrichtung V gemäß dem dargestellten Beispiel in ihrer Ausgangsstellung vor dem Fügevorgang. Der Stift 3 ragt zum Teil aus der Schulter 2 hervor und ist in dieser Position fixiert. Schulter 2 und Stift 3 sind durch den Drehantrieb 1 in Rotation um die Rotationsachse 4 versetzt. Schulter 2 und Stift 3 wurden dabei mittels einer nicht dargestellten Heizeinrichtung auf Betriebstemperatur vorgewärmt. Die Bewegungen der Vorrichtung V in Richtung der Längsachse des Stifts sind in Figur 1 durch den auf dem Drehantrieb 1 jeweils dargestellten Pfeil 10 veranschaulicht.

In Figur 1b) ist die Vorrichtung V in einer in Richtung der Längsachse des Stifts 2 in Richtung der Bauteile 6, 7 abgesenkten Stellung dargestellt, in der der Stift 3 in Kontakt mit der Oberfläche des ersten Bauteils 6 kommt. Die Rotationsgeschwindigkeit des Stifts 3 und die von der Vorrichtung V ausgeübte Axialkraft auf das erste Bauteil 6 sind ausreichend hoch, um ein Aufschmelzen des ersten Bauteils 6 im Kontaktbereich mit dem Stift 3 zu bewirken.

Es ist bei bestehendem Kontakt des Stifts 2 mit dem Bauteil 6 beispielsweise möglich, durch die Anschlüsse 5, 9 über den Stift 3 und die Badabstützung 8 einen elektrischen Strom durch die Bauteile 6, 7 zu leiten und so beispielsweise Verunreinigungen auf den Bauteiloberflächen zu verdampfen. Durch den Strom kann jedoch auch eine gezielte Erwärmung der Bauteile 6, 7 erfolgen. Außerdem kann mittels einer nicht näher dargestellten Widerstandsmesseinrichtung der elektrische Widerstand bzw. die Impedanz bestimmt werden, den der elektrische Strom beim Fließen durch die Bauteile 6, 7 erfährt. Auf diese Weise können Rückschlüsse auf den Prozess getroffen werden und gegebenenfalls kann eine Prozessregelung durchgeführt werden.

In Figur 1c) ist die Vorrichtung V in einer weiter in Richtung der Bauteile 6, 7 abgesenkten Stellung gezeigt. Dabei ist der Stift 3 zum Teil in das erste Bauteil 6 eingeführt. Das Eindringen wird durch die Rotation des Stifts sowie die durch die Vorrichtung V in Richtung der Bauteile 6, 7 ausgeübte Axialkraft erreicht. Der Werkstoff des ersten Bauteils 6 wird durch den Stift 3 aufgeschmolzen und beim Eindringen in das Bauteil 6 verdrängt. Gleichzeitig steht die rotierende Schulter 2 in Kontakt mit der Oberfläche des Bauteils 6 und erwärmt dieses zusätzlich. Dabei wird die durch die Schulter 2 ausgeübte Axialkraft auf das Bauteil 6 und somit die Axialbewegung der Vorrichtung in der in Figur 1c) dargestellten Position verringert, wie durch den gegenüber den Figuren 1a) und 1b) verkürzten Pfeil 10 angedeutet. Durch das Erwärmen des Bauteils 6 durch die Schulter 2 wird das Eindringen des Stifts 3 in das Bauteil 6 sowie das partielle Aufschmelzen des Bauteils 6 erleichtert. Der Stift 3 verrührt dabei den aufgeschmolzenen Werkstoff des Bauteils 6.

In der in Figur 1d) dargestellten Betriebsposition wurde der Stift 3 weiter aus der Schulter 2 ausgefahren. Dabei bleibt die Schulter 2 mit der Oberfläche des Bauteils 6 in Kontakt und übt weiterhin eine geringfügige Axialkraft aus. Die Bewegungen des Stifts 3 sind durch einen auf dem Stift 3 jeweils dargestellten Pfeil 11 veranschaulicht. Es ist dabei grundsätzlich möglich, dass die Schulter 3 während des Einführens des Stifts 2 in das Bauteil 6 zumindest zeitweise von dem Bauteil 6 zurückgezogen wird, um einen Freiraum zur Aufnahme von durch den Stift 3 gegebenenfalls in Richtung der Oberfläche des Bauteils 6 verdrängtem Material des Bauteils 6 zu bilden.

Beim Ausfahren des Stifts 3 aus der Schulter 2 heraus trifft dieser auf die Oberfläche des zweiten Bauteils 7. Der Stift 3 wird dabei nur geringfügig in das zweite Bauteil 7 eingeführt. Das zweite Bauteil 7 besitzt einen höheren Schmelzpunkt und eine höhere Festigkeit als das erste Bauteil 6 und wird durch den rotierenden Stift 3 nicht im gleichen Maße wie das erste Bauteil 6 aufgeschmolzen. Lediglich im Bereich lokal unterhalb des Stiftkopfes kommt es zu einer lokalen Aufschmelzung des zweiten Bauteils 7. Aufgrund der höheren Festigkeit ist das Einführen des Stifts 3 in das zweite Bauteil 7 mit einem höheren Kraftaufwand verbunden als das Einführen in das erste Bauteil 6. Durch die rotierende Bewegung des Stifts 3 wird das aufgeschmolzene Material des ersten Bauteils 6 mit dem aufgeschmolzenen Material des zweiten Bauteils 7 verrührt. Es kommt dabei in dem Einwirkungsbereich des Stifts 3 zu einer Vermischung der Werkstoffe der Bauteile 6, 7.

In den Figuren 1e) und 1f) ist das Zurückziehen des Stifts 3 in die Schulter 2 dargestellt. Dabei hinterlässt der Stift 3 eine im Wesentlichen seinem Durchmesser entsprechende Öffnung 12, die sich vollständig durch das erste Bauteil 6 und geringfügig in das zweite Bauteil 7 erstreckt. Beim Zurückziehen des Stifts 3 füllt sich die Öffnung 12 mit aufgeschmolzenem Material hauptsächlich des ersten Bauteils 6. Durch den Pfeil 10 ist in Figur 1f) angedeutet, dass die Schulter 2 während des Zurückziehens des Stifts 3 geringfügig in die Oberfläche des ersten Bauteils 6 eingeführt wird. Auf diese Weise wird der Füllprozess der Öffnung 12 mit Material des Bauteils 6 unterstützt.

In Figur 1g) ist der Stift 3 vollständig in die Schulter 2 zurückgezogen, und die Vorrichtung V wird in Richtung der Längsachse des Stifts 3 von den Bauteilen 6, 7 entfernt, wie wiederum schematisch durch den Pfeil 10 angedeutet. In Figur 1g) ist schematisch eine Vertiefung 13 in dem Bauteil 6 dargestellt, die durch das geringfügige Einführen der Schulter 2 in das Bauteil 6 verursacht wurde.

Im Bereich der Öffnung 12 kommt es anschließend zu einer Verfestigung der durchmischten Werkstoffe der Bauteile 6, 7 und somit zu einer Punktschweißverbindung zwischen den Bauteilen 6, 7.

Der Fügevorgang kann in entsprechender Weise an anderen Punkten, an denen sich die Bauteile 6, 7 überlappen, wiederholt werden.

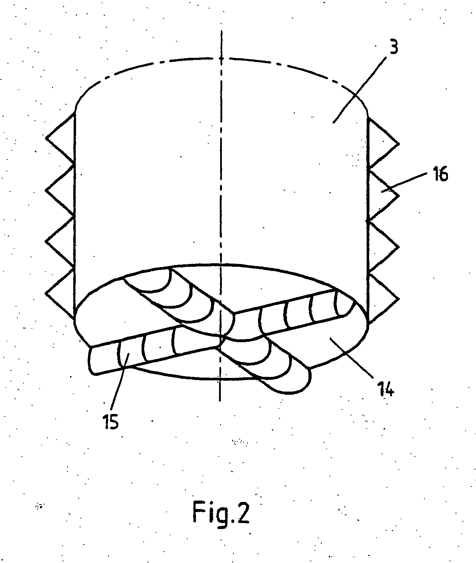

In Figur 2 ist schematisch eine vergrößerte Teilansicht des Stifts 3 dargestellt. Dabei sind an der Kopfseite 14 des Stifts 3 als radial angeordnete Buckel ausgebildete Formelemente 15 erkennbar. Außerdem sind an den Seitenflächen des Stifts 3 weitere Formelemente 16 dargestellt. Die in Figur 2 lediglich schematisch mit einem dreiecksförmigen Querschnitt dargestellten Formelemente 16 verlaufen dabei nach Art eines Gewindes über den Umfang des Stifts 3. Mit Hilfe der Formelemente 15, 16 wird eine verbesserte und gezielte Aufschmelzung bzw. Aufweichung der Bauteile 6, 7 erreicht und somit der Fügevorgang gezielt und vorteilhaft beeinflusst. Auch wird das Verrühren der aufgeweichten bzw. aufgeschmolzenen Werkstoffe gezielt verbessert. Selbstverständlich sind auch andere Ausgestaltungen der Formelemente 15, 16 denkbar. So sind erfindungsgemäß Schneiden (nicht dargestellt) vorgesehen, durch die beim Einführen des Stifts 3 in die Bauteile 6, 7 eine spanende Bearbeitung des zweiten Bauteils 7 bewirkt wird.

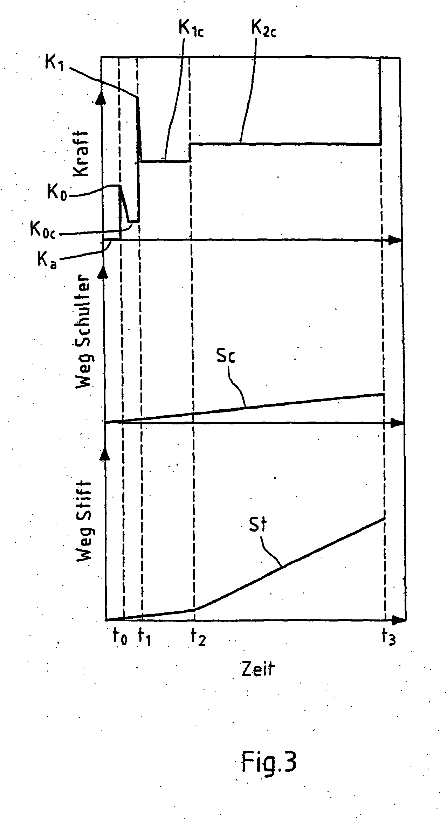

In Figur 3 ist lediglich schematisch ein Diagramm einer Kraft-Weg-Messung gemäß der Erfindung dargestellt, die beispielsweise für einen dem in Figur 1 dargestellten Fügeprozess entsprechenden Prozess durchgeführt wurde. Dabei sind über der Zeit zum einen die beim Fügevorgang in Richtung der Längsachse des Stifts 3 zurückgelegten Wege des Stifts 3 und der Schulter 2 in Richtung der Bauteile 6, 7 schematisch durch die Kurven St und Sc bis zu einem Zeitpunkt t₃ dargestellt. Die Wegdarstellung beginnt dabei zu einem Zeitpunkt kurz vor dem Auftreffen des Stifts 3 auf das erste Bauteil 6. Weiterhin ist die Axialkraft in Richtung der Längsachse des Stifts, die während des Fügevorgangs durch die Fügevorrichtung V ausgeübt wird, über der Zeit dargestellt. Die durch die Fügevorrichtung V für den Vortrieb während des Fügevorgangs ausgeübte Kraft umfasst dabei sowohl die Kraft zum axialen Bewegen der Schulter 2 mit dem Stift 3 als auch die durch den Stift 3 für ein Ausfahren aus der Schulter 2 erforderliche Axialkraft.

Auf der Zeitachse sind die folgenden charakteristischen Zeitpunkte bezeichnet, die im Wesentlichen auch in den Figuren 1a) bis 1g) dargestellt sind:
- t₀:: Der Stift 3 erreicht das erste Bauteil 6 (Fig. 1b)),
- t₁:: die Schulter 2 erreicht das erste Bauteil 6 (Fig. 1c)),
- t₂:: das Ausfahren des Stifts 3 aus der Schulter 2 beginnt (Fig. 1c)),
- t₃:: der Stift 3 erreicht das zweite Bauteil 7 (Fig. 1d)).

In den Wegdiagrammen des Stifts 3 und der Schulter 2 sind durch die Kurven St und Sc die Wege des Stifts 3 und der Schulter 2 während des Fügevorgangs ab kurz vor dem Auftreffen des Stifts 3 auf dem ersten Bauteil 6 bis zum vollständigen Ausfahren des Stifts 3 in die Bauteile 6, 7 dargestellt. Dabei verlaufen die Kurven bis zu dem in Figur 1c) dargestellten Zeitpunkt t₂ gleichartig. Bis zum Zeitpunkt t₂ werden die Schulter 2 und der Stift 3 gemeinsam in Richtung der Bauteile 6, 7 bewegt. Ab dem Zeitpunkt t₂, zu dem das Ausfahren des Stifts 3 aus der Schulter 2 beginnt, legt der Stift 3 einen größeren Weg zurück, da der Stift 3 zusätzlich zu einer geringfügigen Axialbewegung mit der Schulter 2 zusammen eine Bewegung durch das Ausfahren aus der Schulter 2 heraus vollführt. Ab dem Zeitpunkt t₃, zu dem der Stift 3 auf das höher feste zweite Bauteil 7 auftrifft, bewegen sich die Schulter 2 und der Stift 3 praktisch kaum noch in Richtung der Bauteile 6, 7.

Im in Figur 3 obersten Diagramm ist die durch die Fügevorrichtung während des Einführens des Stifts ausgeübte Kraft in Richtung der Längsachse des Stifts über der Zeit dargestellt. Bis zum Zeitpunkt t₀ besitzt die Kraft einen konstanten Anfangswert Kₐ, der erforderlich ist, um die Schulter 2 zusammen mit dem Stift 3 in Richtung des Bauteils 6 zu bewegen. Zu den Zeitpunkten t₀ und t₁ treten Maxima K₀, K₁ der Kraft auf, wobei sich die Kraft direkt nach den Maxima K₀, K₁ jeweils auf einen konstanten Wert K_{0c}, K_{1c} verringert. Der Wert K_{0c} liegt dabei über dem anfangs erforderlichen Kraftwert Kₐ, und der Wert K_{1c} liegt über dem Wert K_{0c}.

Das Maximum K₀ und der anschließende konstante Kraftwert K_{0c} werden durch das Auftreffen des Stifts 3 auf das erste Bauteil 6 verursacht. Zum Einführen des Stifts 3 in das erste Bauteil 6 ist ein gegenüber dem Vortrieb ohne Kontakt mit dem Bauteil 6 erhöhter Kraftaufwand erforderlich. Das Maximum K₁ und der folgende konstante Kraftwert K_{1c} werden durch den weiter erhöhten Kraftaufwand verursacht, der entsteht, wenn zusätzlich die Schulter 2 auf das erste Bauteil 6 auftrifft.

Weiterhin ist in dem Kraftdiagramm ein Anstieg der Kraft zum Zeitpunkt t₂ auf den konstanten Wert K_{2c} erkennbar. Zum Zeitpunkt t₃ steigt die Kraft erneut stark an. Diese Kraftanstiege finden ihre Ursache zum einen darin, dass für das zum Zeitpunkt t₂ beginnende Ausfahren des Stifts 3 aus der Schulter 2 in das Bauteil 6 hinein ein erhöhter Kraftaufwand erforderlich ist (K_{2c}). Zum anderen steigt die für den Vortrieb des Stifts 3 erforderliche Kraft stark an, wenn der Stift zum Zeitpunkt t₃ das höher feste zweite Bauteil 7 erreicht.

Mittels der in Figur 3 dargestellten Kraft-Weg-Messung gemäß der Erfindung können anhand des zeitlichen Verlaufs der für den Vortrieb der Vorrichtung V während des Fügevorgangs erforderlichen Kraft die charakteristischen Zeitpunkte t₀ bis t₃ mit hoher Genauigkeit festgestellt werden. Die so gewonnenen Daten können für eine Prozessregelung eingesetzt werden, so dass der Fügevorgang und entsprechend die erzeugte Verbindung zwischen den Bauteilen 6, 7 weiter optimiert werden kann.

## Patentansprüche

1. Vorrichtung zum Fügen von mindestens zwei Bauteilen (6,7) aus artverschiedenen Werkstoffen, insbesondere Metallbauteilen aus artverschiedenen Werkstoffen, mit unterschiedlichen Schmelzpunkten mittels Reibrührschweißen,
- mit einer Schulter (2) und einem Stift (3),
- mit Mitteln zum Verschieben des Stifts (3) zwischen einer aus der Schulter (2) in Richtung seiner Längsachse hervorstehenden Position und einer in die Schulter (2) zurückgezogenen Position,
- mit Mitteln zur Rotation der Schulter (2) und des Stifts (3) um die Längsachse des Stifts (3),
- mit Mitteln zum Bewegen der Schulter (2) in Richtung der Längsachse des Stifts (3),
- wobei an der Kopfseite (14) des Stiftes (3) mindestens ein Formelement (15,16) vorgesehen ist, **dadurch gekennzeichnet, dass** zumindest ein als Schneide ausgebildetes Formelement (15,16) an dem Stift (3) angebracht oder in diesen eingearbeitet ist, wobei die Schneide für eine spanende Bearbeitung der zu fügenden Bauteile geeignet ist, und dass Mittel zur Bestimmung der Stiftposition über eine Kraft-Weg- und/oder eine Drehmomentmessung vorgesehen sind.

## Claims

1. Device for joining at least two components (6, 7) consisting of different types of materials, in particular metal components consisting of different types of materials, having different melting points, by means of friction stir welding,
- having a shoulder (2) and a pin (3),
- having means for moving the pin (3) between a position projecting out of the shoulder (2) in the direction of the longitudinal axis of the pin and a position drawn back into the shoulder (2),
- having means for rotating the shoulder (2) and the pin (3) about the longitudinal axis of the pin (3),
- having means for moving the shoulder (2) in the direction of the longitudinal axis of the pin (3),
- wherein at least one shaped element (15, 16) is provided on the head end (14) of the pin (3), **characterised in that** at least one shaped element (15, 16), which is designed as a cutting edge, is attached to the pin (3) or is incorporated into the pin, wherein the cutting edge is suitable for machining the components to be joined, and **in that** means are provided for determining the pin position via a force-path measurement and/or a torque measurement.

## Revendications

1. Dispositif d'assemblage d'au moins deux pièces de construction (6,7) constituées de matériaux de types différents, en particulier de pièces de construction métalliques constituées de matériaux de types différents, ayant des points de fusion différents, par soudage par friction-malaxage, comprenant :
- un collier (2) et une tige (3),
- des moyens pour déplacer la tige (3) entre une position faisant saillie du collier (2) en direction de son axe longitudinal et une position en retrait dans le collier (2),
- des moyens pour faire tourner le collier (2) et la tige (3) autour de l'axe longitudinal de la tige (3),
- des moyens pour déplacer le collier (2) en direction de l'axe longitudinal de la tige (3),
- dans lequel au moins un élément moulé (15, 16) est prévu sur le côté de tête (14) de la tige (3),
**caractérisé en ce que**
au moins un élément moulé (15, 16) conformé en tranchant est monté sur la tige (3) ou incorporé à celle-ci, dans lequel le tranchant convient à l'usinage par enlèvement de copeaux des composants à assembler, et **en ce qu'**il est prévu des moyens pour déterminer la position de la tige par une mesure de force-course et/ou de couple de rotation.
